Europäisches Patentamt

European Patent Office

Office européen des brevets

(11) Numéro de publication : **0 037 757**
**B1**

# (12) FASCICULE DE BREVET EUROPÉEN

(45) Date de publication du fascicule du brevet :
05.10.83

(51) Int. Cl.³ : **F 02 B 77/08**, G 01 P 3/48

(21) Numéro de dépôt : **81400411.5**

(22) Date de dépôt : **17.03.81**

(54) **Système de fixation de la position d'un capteur.**

(30) Priorité : **28.03.80 FR 8006952**

(43) Date de publication de la demande :
**14.10.81 Bulletin 81/41**

(45) Mention de la délivrance du brevet :
**05.10.83 Bulletin 83/40**

(84) Etats contractants désignés :
**BE DE FR GB IT SE**

(56) Documents cités :
**DE A 2 525 314**
**DE A 2 721 606**
**FR A 1 208 048**
**US A 3 936 684**

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Rousseau, Christian**
**6, allée Suzanne**
**F-92160 Antony (FR)**

(74) Mandataire : **Colas, Jean-Pierre et al**
**8 et 10 Avenue Emile Zola**
**F-92109 Boulogne-Billancourt (FR)**

Jouve, 18, rue St-Denis, 75001 Paris, France

Système de fixation de la position d'un capteur

La présente invention est relative à un système de fixation de capteur permettant d'obtenir des positions différentes avant ou lors de la mise en place sur un véhicule automobile, en fonction des paramètres recherchés.

Il est connu que, dans un véhicule automobile, il peut être intéressant de monter radialement, en position fixe, au moins un capteur face à une cible qui défile, par exemple à la vitesse de rotation du vilebrequin du véhicule. Cette cible peut être constituée par un disque solidaire du vilebrequin et muni à sa périphérie d'accidents mécaniques susceptibles d'influencer le capteur et, au fur et à mesure qu'ils défilent devant lui, de provoquer l'émission de signaux à partir de ce dernier. On peut citer à titre d'exemple de tels capteurs, les capteurs de position angulaire et les capteurs de vitesse largement utilisés dans les applications d'électronique automobile.

Dans le cas de l'allumage électronique par exemple, une difficulté survient si on veut monter un même capteur sur toute une gamme de véhicules, du fait que certains paramètres, comme l'angle d'avance à l'allumage, varient d'un type de véhicule au suivant.

La demande de brevet DE-A-27 21 606 décrit un système de réglage de la position d'un capteur pour moteur à combustion interne dans lequel le capteur peut être déplacé en translation le long d'un rail solidaire d'une partie fixe d'un moteur. Ce capteur est placé devant une cible rotative qui défile devant lui et doit être placé dans une position angulaire prédéterminée sur le carter de la cible. A cet effet, le carter porte un repère et on utilise un calibre pour positionner le capteur par rapport au repère. Le capteur est ensuite verrouillé sur le rail et le calibre est enlevé.

Un tel système nécessite donc une opération de réglage pour le montage de chaque capteur, opération qui est incompatible avec un montage en grande série.

Par ailleurs, pour réduire le coût des pièces telles qu'un capteur électronique, il est bien connu qu'il y a intérêt, d'une part, à produire et à stocker de grandes séries de pièces identiques et, d'autre part, à éviter de préférence le stockage, dans le réseau de distribution, d'un grand nombre de capteurs différents selon le type de véhicule auquel ils sont destinés.

A cet effet, l'invention a pour objet un système de fixation de la position d'un capteur de vitesse, de position ou de proximité, comprenant un corps de capteur enfermant des parties électriquement actives, une barrette en forme d'arc de cercle et en tous points parallèle à une cible influençant ledit capteur lors de son défilement devant lui et des moyens de fixation de la barrette sur un carter placé au voisinage de la cible, caractérisé en ce que la barrette est montée fixe en position sur le carter et en ce qu'il est prévu des moyens définissant des positions prédéterminées de montage du capteur le long de ladite barrette de fixation.

D'autre part, pour un même type de véhicule, il peut être nécessaire, sans changer le capteur, de modifier la loi d'avance à l'allumage, soit en fonction des variations des caractéristiques du moteur au cours de sa vie, soit pour tenir compte des variations temporelles ou locales de la composition des carburants, surtout si la garde au cliquetis du moteur considéré est faible pour ladite loi d'avance, soit, enfin, pour permettre la conformité à des normes différentes, d'anti-pollution par exemple.

Pour ce faire, suivant une forme de réalisation, le corps de capteur est solidarisé mécaniquement, de façon non définitive, sur la barrette de fixation en l'une des positions prédéterminées de ladite barrette.

D'autres caractéristiques ressortiront de la description qui suit et qui n'est donnée qu'à titre d'exemple. A cet effet, on se reportera aux figures jointes dans lesquelles :

la figure 1 représente, en vue de face, un capteur avec sa barrette de fixation suivant l'invention et un disque solidaire du vilebrequin,

la figure 2 représente, en vue de dessus, le même ensemble.

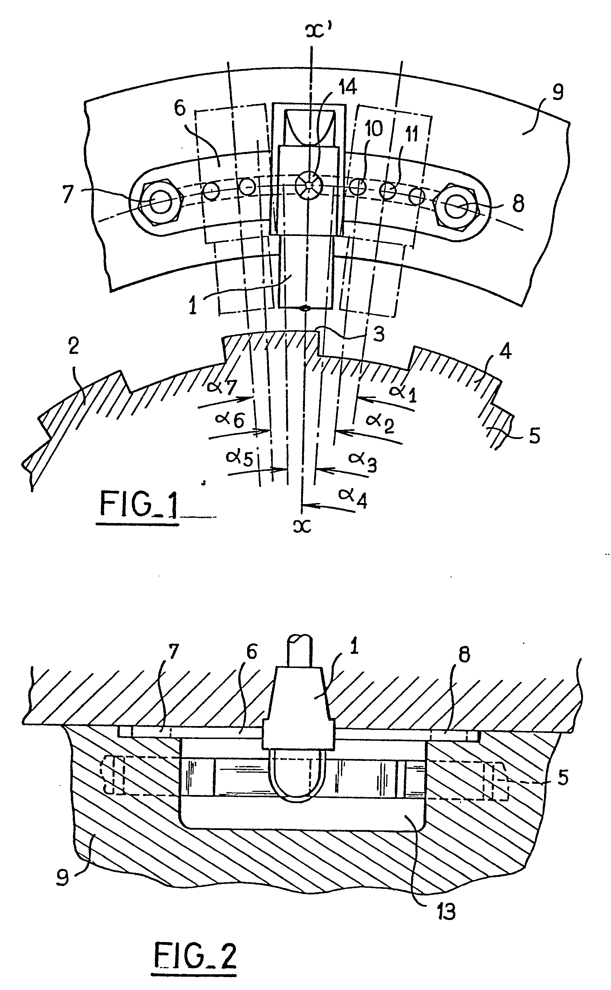

Suivant la représentation des figures 1 et 2, un capteur 1 de nature connue, par exemple électromagnétique, génère des signaux électriques à partir de la détection des accidents 2, 3, 4... du disque 5. Il transmet donc les informations de vitesse/position angulaire du vilebrequin au calculateur du bloc électronique associé.

Ce capteur 1 est monté coulissant sur une barrette 6 fixée par exemple par deux vis 7 et 8 à ses extrémités sur le carter d'embrayage 9. La barrette est munie d'un certain nombre de trous 10, 11... équidistants, par exemple sept trous, sur chacun desquels on peut soit arrêter le capteur à l'aide d'une goupille 14, soit surmouler le capteur, le trou permettant un ancrage dudit surmoulage.

Chacun des trous correspond par exemple à une valeur d'avance initiale à l'allumage, valeur positive à droite de l'axe de symétrie XX' et négative à gauche. Ces différentes valeurs sont représentées par les angles $\alpha$ de la figure 1 relativement à l'axe XX'.

Suivant l'invention, l'angle d'avance initiale à l'allumage est déterminé en fonction du type de véhicule considéré soit par un passage de la goupille 14 au travers du trou approprié de la barrette 6, soit par un positionnement approprié du capteur sur la barrette 6 dans le moule de surmoulage.

On réalise donc, grâce à la présente invention, un capteur 1 solidarisé avec une barrette de fixation avec plusieurs positions possibles relativement à l'axe XX', réglables dans le cas d'une fixation mécanique, par goupille par exemple, ou indéréglables dans le cas d'un surmoulage dudit capteur sur ladite barrette. Le carter 9 présente, en face du disque 5, une fenêtre oblongue 13 obtenue directement de fonderie de dimensions compatibles avec les différentes positions possibles du capteur 1, le long de la barrette de fixation 6. Cette fenêtre oblongue 13, ne contribuant ni à la fixation du capteur 1 ni à son guidage, peut être laissée brute de fonderie sans usinage supplémentaire.

Les sept valeurs de position angulaire possibles peuvent varier de − 6° à + 6° de deux en deux degrés. Ces informations numériques sont données à titre d'exemple, sans qu'elles puissent en quoi que ce soit réduire le cadre de la présente invention.

Selon une variante de réalisation l'ensemble est réalisé en matière plastique et la barrette de fixation est réalisée dans une matière identique à celle du corps du capteur 1, ladite barrette étant soit obtenue au cours d'une opération de moulage antérieure soit au cours de celle qui forme le corps du capteur. Dans ce dernier cas le moule est muni d'un coulisseau en arc de cercle portant l'empreinte de la barrette et permettant de faire varier la position de celle-ci par rapport au corps du capteur.

Enfin par un déport convenable de la fenêtre de fixation du capteur et des avant-trous il est possible, grâce à la forme de réalisation décrite, d'obtenir ladite fenêtre et lesdits avant-trous directement de fonderie et sans usinages ultérieurs, sans qu'il soit pour autant nécessaire de munir le moule de fonderie de plusieurs noyaux mobiles. Selon cette variante de réalisation, les trous 10, 11 de la barrette 6 peuvent être supprimés.

## Revendications

1. Système de fixation de la position d'un capteur de vitesse, de position ou de proximité, comprenant un corps de capteur (1) enfermant des parties électriquement actives, une barrette (6) en forme d'arc de cercle en tous points parallèle à une cible (5) influençant ledit capteur lors de son défilement devant lui et des moyens (7, 8) de fixation de la barrette (6) sur un carter (9) placé au voisinage de la cible, caractérisé en ce que la barrette (6) est montée fixe en position sur le carter (9) et en ce qu'il est prévu des moyens (10, 11) définissant des positions prédéterminées (α1 à α7) de montage du capteur (1) le long de ladite barrette de fixation (6).

2. Système selon la revendication 1, caractérisé en ce que le corps de capteur est solidarisé mécaniquement, de façon non définitive, sur la barrette de fixation (6) en l'une des positions prédéterminées (α1 à α7) de ladite barrette.

3. Système selon la revendication 1, caractérisé en ce que le corps de capteur est solidarisé par surmoulage, de façon définitive et indéréglable, sur la barrette (6) de fixation en l'une des positions prédéterminées de ladite barrette.

4. Système suivant l'une quelconque des revendications 1 à 3, caractérisé en ce qu'une fenêtre (13) sur le carter (9) de la cible et des avant-trous (10, 11) sur le carter constituent des moyens de fixation du capteur (1) qui sont situés dans des positions relatives telles qu'il est possible de les obtenir directement de fonderie sans usinage ultérieur.

## Claims

1. A system for fixing the position of a speed, position or proximity detector, comprising a detector body (1) containing electrically active components, a bar member (6) which is in the form of a circular arc and which is parallel at all points to a target (5) which influences said detector when it passes therebefore and means (7, 8) for fixing the bar member (6) to a casing (9) disposed in the vicinity of the target, characterised in that the bar member (6) is mounted in a fixed position on the casing (9) and that there are means (10, 11) for defining predetermined positions (α1 to α7) for mounting the detector (1) along said fixing bar member (6).

2. A system according to claim 1 characterised in that the detector body is mechanically secured in a non-definitive manner to the fixing bar member (6) at one of the predetermined positions (α1 to α7) of said bar member.

3. A system according to claim 1 characterised in that the detector body is secured to the fixing bar member (6) in a definitive manner such that it cannot become maladjusted, by being moulded thereonto, at one of the predetermined positions on said bar member.

4. A system according to any one of claims 1 to 3 characterised in that an aperture (13) in the casing (9) of the target and pre-holes (10, 11) on the casing form means for fixing the detector (1), which are disposed in relative positions such that it is possible to produce them directly by casting, without subsequent machining.

## Ansprüche

1. Befestigungsvorrichtung für einen Positionsgeber zur Erfassung der Geschwindigkeit, einer Stellung oder einer Annäherung, mit einem Geberkörper (1), der elektrisch wirksame Teile umgibt, mit einer kreisbogenförmigen Halteschiene (6), die überall parallel zu einer Markierungsscheibe (5) ist, welche während ihres Vorbeilaufs am Geber auf diesen einwirkt und mit Vorrichtungen (7, 8) zur Befestigung der Halteschiene (6) an einem in der Nähe der Markierungsscheibe vorgesehenen Gehäuse (9), dadurch gekennzeichnet, daß die Halteschiene (6) stellungsfest mit dem Gehäuse (9) verbunden ist und daß Mittel (10, 11) vorgesehen sind, die vorgegebene Positionen (α1 bis α7) definieren für die Montage des Gebers (11) entlang der Halteschiene (6).

2. Anordnung nach Anspruch 1, dadurch gekennzeichnet, daß das Gebergehäuse mechanisch aber nicht unlösbar mit der Halteschiene (6) an einer der vorgegebenen Positionen (α1 bis α7) der Halteschiene befestigt ist.

3. Anordnung nach Anspruch 1, dadurch gekennzeichnet, daß das Gebergehäuse mittels eines Gießvorgangs end gültig und unlösbar mit der Halteschiene (6) an einer der vorgegebenen Positionen der Halteschiene befestigt ist.

4. Anordnung nach einem der Ansprüche 1 bis 3, dadurch gekennzeichnet, daß ein Fenster (13) am Gehäuse (9) der Markierungsscheibe und Vorderlöcher (10, 11) am Gehäuse die Befestigungsanordnung für den Geber (1) bilden und solche relative Stellungen aufweisen, daß es möglich ist, sie aus dem Gußvorgang ohne folgende Nachbearbeitung zu erhalten.

FIG_1

FIG_2